# EUROPEAN PATENT APPLICATION

(11) **EP 4 679 611 A1**
(43) Date of publication of application: **14.01.2026**
(21) Application number: 23926480.7
(22) Date of filing: 28.12.2023
(51) Int. Cl.: H01M 50/526, C09D 7/61, C09D 183/04, H01M 50/522, H01M 50/524, H01M 50/588, H01M 50/591

(54) **INSULATION FILM AND METHOD FOR FORMING SAME, AND COMPOSITE MEMBER**

(30) Priority: 08.03.2023 JP 2023036021
(71) Applicant: IBIDEN CO., LTD., Ogaki-shi, Gifu 503-8604 (JP)
(72) Inventor: GOTO Shinnosuke, Ibi-gun, Gifu 501-0695 (JP); USHIDA Takeshi, Ibi-gun, Gifu 501-0695 (JP); FUJITA Yoshitaka, Ibi-gun, Gifu 501-0695 (JP)
(74) Representative: Hoffmann Eitle
(86) International application number: PCT/JP2023/047227
(87) International publication number: WO 2024/185276

(57) **Abstract**

To provide an insulation film which has an excellent insulation property and heat resistance, which does not require a winding operation using a ceramic tape or the like, which does not have a problem of winding unevenness, a gap, or peeling off, and which can even be easily cope with a conductive base material having a complicated shape. **In** an insulation film (1), at least an inorganic material (20) is dispersed in a first matrix (10) containing silicone. A material of the first matrix (10) or a material of a second matrix having a component different from that of the first matrix (10) may be used for impregnation. The insulation film (1) is formed by dip coating, for example.

## Description

### TECHNICAL FIELD

The present invention relates to an insulation film, a method for forming the insulation film, and a composite member in which a base material including a conductive base material such as a bus bar is covered with an insulation film.

### BACKGROUND ART

In order to electrically connect components, a conductive member in which an insulation film is formed on a surface of a metal piece is used. For example, various electronic devices, electric vehicles or hybrid vehicles driven by an electric motor, storage batteries, and the like are mounted with a power storage device in which a plurality of battery cells are connected in series or in parallel by a bus bar, which is a conductive member. In addition, a lithium ion secondary battery, which has higher capacity and is capable of higher output than a lead-acid battery, a nickel-metal hydride battery, or the like, is mainly used for the battery cells.

In the battery cell, an overcurrent is applied during charging and discharging, and the bus bar may generate heat, and in some cases, a flame may be generated. Therefore, the bus bar is required to have an insulation property and heat resistance. For example, Patent Literature 1 describes a bus bar in which a ceramic tape such as a mica tape is wound as a refractory layer around a copper bus bar body.

### CITATION LIST

### PATENT LITERATURE

Patent Literature 1: CN216902355U1

### SUMMARY OF INVENTION

### TECHNICAL PROBLEM

However, in Patent Literature 1, it is necessary to wind the ceramic tape around the bus bar body. The bus bar may have a complicated shape due to a spatial limitation of an installation location of the battery cell, and when the bus bar has a complicated shape, it is difficult to wind the ceramic tape around every corner of the bus bar body. When the ceramic tape has winding unevenness or a gap, a sufficient insulation property and heat resistance cannot be obtained. It is also assumed that an adhesive surface of the ceramic tape is peeled off. Further, although a nylon tape is wound as an insulation layer on an outer side of the mica tape, the nylon tape is weak against heat and has a problem in heat resistance.

Therefore, an object of the present invention is to provide an insulation film which has an excellent insulation property and heat resistance, which does not require a winding operation using a ceramic tape or the like, which does not have a problem of winding unevenness, a gap, or peeling off, and which can even easily cope with a complicated shape.

### SOLUTION TO PROBLEM

The above object of the present invention is achieved by the following configuration [1] relating to an insulation film.
[1] An insulation film containing:
   a first matrix containing silicone; and
   at least an inorganic material dispersed in the first matrix.
      In addition, preferred embodiments of the present invention relating to the insulation film relate to the following [2] to [9].
[2] The insulation film according to [1], in which a layer comprising a material of the first matrix is provided on at least a part of a film surface.
[3] The insulation film according to [1] or [2], having a gradient composition of the first matrix, in which a content of the first matrix increases toward the film surface.
[4] The insulation film according to any one of [1] to [3], in which a layer comprising a material of a second matrix having a component different from a component of the first matrix is provided on at least a part of the film surface.
[5] The insulation film according to [4], having a gradient composition of the second matrix, in wherein a content of the second matrix increases toward the film surface.
[6] The insulation film according to any one of [1] to [5], in which the inorganic material is at least one kind selected from silica, alumina, mullite, and zirconia.
[7] The insulation film according to any one of [1] to [5], in which the inorganic material is at least one kind selected from a glass-based material, mica, kaolin, talc, clay, pyrophyllite, montmorillonite, bentonite, wollastonite, xonotlite, zeolite, diatomaceous earth, and halloysite.
[8] The insulation film according to any one of [1] to [7], in which the inorganic material has at least one kind selected from the group consisting of a flaky shape, a fibrous shape, and a particulate shape.
[9] The insulation film according to any one of [1] to [5], in which the inorganic material contains at least one of a flaky glass-based material and mica.
   The above object of the present invention is achieved by the following configuration [10] relating to a method for producing an insulation film.
[10] A method for forming an insulation film, including: immersing a base material in a coating liquid containing a material of a first matrix and at least an inorganic material, and then drying the coating liquid adhering to the base material.
   In addition, a preferred embodiment of the present invention relating to the insulation film relates to the following [11].
[11] The method for forming an insulation film according to [10], in which the base material on which an insulation film has been formed is impregnated by immersing in a coating liquid containing the material of the first matrix or a material of a second matrix having a different component from a component of the first matrix.
   The above object of the present invention is achieved by the following configuration [12] relating to a composite member.
[12] A composite member including: a base material at least partially covered with the insulation film according to any one of [1] to [9].
   In addition, preferred embodiments of the present invention relating to the composite member relate to the following [13] and [14].
[13] The composite member according to [12], in which the base material is a bus bar that connects a plurality of battery cells or battery module.
[14] The composite member according to [12], in which the base material is a connector, a protective component for a battery module, a case of an electronic component, a battery cell, a battery module, a battery pack, or a coil of a motor.

### ADVANTAGEOUS EFFECTS OF INVENTION

The insulation film according to the present invention contains silicone as a matrix, and silicone is thermally decomposed to eliminate a functional group, thereby forming a SiO bond and further changing to SiO₂. SiO₂ is not burned out even when subjected to a flame, and the heat resistance is improved. In addition, the inorganic material also has excellent heat resistance. Further, silicone and the inorganic material both have an excellent insulation property.

In addition, by further impregnating the insulation film, in which the inorganic material is dispersed in silicone as a matrix, with a matrix material, a volatile component in the film material volatilizes during film formation to fill air bubbles generated in the insulation film, and thus the insulation film is denser and a film strength can be increased. In addition, since the material of the matrix remains on at least a part of the surface of the insulation film and cures to form a layer as a top coat, powder falling off of the inorganic material or the like and damage to the film surface can be prevented, and impact resistance can be improved.

Further, since dip coating is performed using a coating liquid containing the matrix and the inorganic material, the method for forming an insulation film is simple in production steps. When the matrix material is used for impregnation, the insulation film is simply impregnated with the matrix material, which is simple.

The insulation film is particularly useful for covering a conductive member such as a bus bar. In this case, since dip coating is used, a winding operation using a ceramic tape or the like is not necessary, there is no problem of winding unevenness, a gap, or peeling off, and it is even possible to easily cope with a complicated shape. In addition, since silicone and the inorganic material have excellent heat resistance, it is even possible to sufficiently cope with a case where, for example, a battery cell of a power storage device to which a bus bar is applied causes thermal runaway and a flame is generated.

### BRIEF DESCRIPTION OF DRAWINGS

[Fig. 1] Fig. 1 is a photograph substituted for a drawing showing a cross section of an insulation film according to a first embodiment of the present invention.
[Fig. 2] Fig. 2 is a photograph substituted for a drawing showing a cross section of an insulation film according to a second embodiment of the present invention.
[Fig. 3] Fig. 3 is a perspective view schematically showing a bus bar, which is a conductive member, as an example of a composite member according to the present invention.
[Fig. 4] Fig. 4 is a schematic diagram showing a test device used in Examples.
[Fig. 5] Fig. 5 is a diagram showing results of observing the presence or absence of peeling off of an insulation film 1A (test piece A/Inventive Example) and a mica tape (test piece B/Comparative Example) after heating using the test device shown in Fig. 4.

### DESCRIPTION OF EMBODIMENTS

Hereinafter, embodiments of the present invention will be described in detail with reference to the drawings. Note that, the present invention is not limited to the embodiments described below, and can be freely changed and implemented without departing from the gist of the present invention.

### [Insulation Film]

### (First Embodiment)

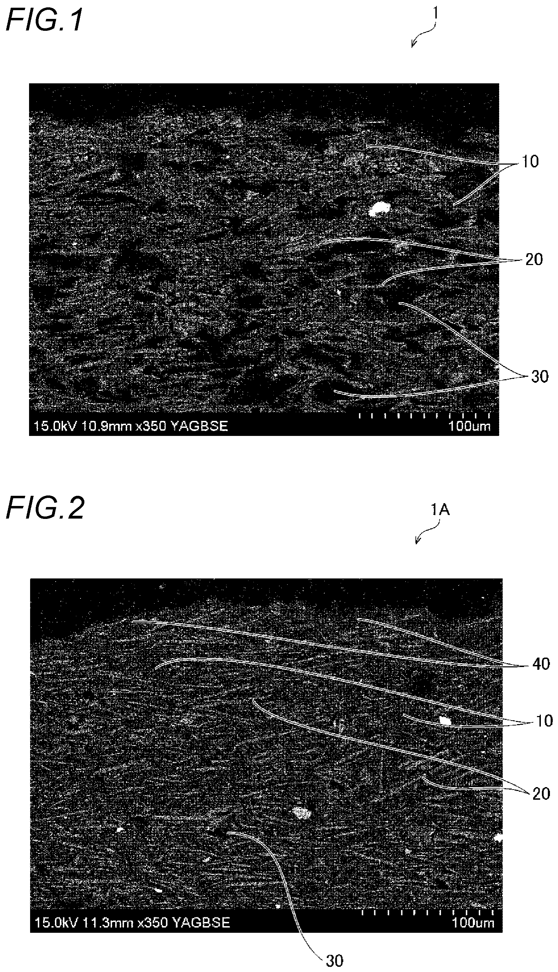

Fig. 1 is a photograph of a cross section of an insulation film according to the present embodiment. In an insulation film 1, an inorganic material (white line segment in the drawing: reference numeral 20) is dispersed in a first matrix (gray portion in the drawing: reference numeral 10) containing silicone.

When the silicone is thermally decomposed, a functional group is eliminated to generate a SiO bond, and the SiO bond is burned out and changed to SiO₂. SiO₂ is not burned out even when subjected to a flame, and the insulation film 1 has excellent heat resistance. Note that, the silicone may be a silicone resin or a silicone rubber, and is preferably a silicone resin from the viewpoint of increasing a density of SiO₂ to be formed.

As to be described later, the insulation film 1 is obtained by dip coating, and it is preferable to use a thixotropic agent in combination in order to improve a coating performance of a coating liquid containing a material of the first matrix 10 and the inorganic material 20.

The inorganic material 20 has a high melting point and excellent heat resistance, and preferably contains a silicate compound. As described above, the silicone can change to SiO₂ by thermal decomposition, but since the silicate compound has the same component as SiO₂ formed by silicone, a bonding force between the first matrix 10 containing silicone and the inorganic material 20 is increased. Note that, the silicate compound is preferably at least one kind selected from a glass-based material, mica, kaolin, talc, clay, pyrophyllite, montmorillonite, bentonite, wollastonite, xonotlite, zeolite, diatomaceous earth, and halloysite.

The inorganic material 20 is preferably at least one kind selected from silica, alumina, mullite, and zirconia from the viewpoint of having a high melting point and a high insulation property. Note that, when a bus bar, which is a conductive member, is applied as an example of a composite member according to the present invention, these materials are inorganic materials having a melting point equal to or higher than a melting point of a metal material used for a general bus bar body and equal to or higher than a thermal exposure temperature assumed, and thus are suitably used for the insulation film 1 for the bus bar.

In addition, the inorganic material 20 has preferably at least one kind selected from the group consisting of a flaky shape, a fibrous shape, and a particulate shape since when the inorganic material 20 is dispersed in the first matrix 10, an adhesion force to the first matrix 10 is increased and a strength of the insulation film 1 is improved.

In the case of containing a glass-based material as the inorganic material 20, the glass-based material is preferably at least one kind selected from a flaky glass, a glass particle, and a glass fiber. Among these, a flaky glass is particularly preferably contained since the flaky glass is oriented in a planar shape in the film and exhibits an excellent insulation property and heat resistance. In addition, the mica described above is also preferably used for the same reason as that for the flaky glass.

A content of the inorganic material 20 with respect to all components in the insulation film 1 is preferably 3 vol% to 70 vol%, more preferably 10 vol% to 50 vol%, and still more preferably 20 vol% to 40 vol%. When the content of the inorganic material 20 is less than 3 vol%, the insulation property and the heat resistance may not be sufficiently obtained. On the other hand, when it is more than 70 vol%, a viscosity of the coating liquid to be subjected to the dip coating is too high and a film forming property is poorer.

In addition, both the silicone and the inorganic material 20 have an excellent insulation property and heat resistance, and thus are useful as a constituent component of the insulation film 1.

Note that, in addition to the first matrix 10 and the inorganic material 20 described above, the insulation film 1 may contain other materials such as a flame retardant, a dispersant, and a pigment as long as the insulation property and the heat resistance are not influenced.

### (Second Embodiment)

In the insulation film 1 according to the first embodiment, the inorganic material 20 is dispersed in the first matrix 10, but in the insulation film 1, a volatile component of the film material volatilizes during film formation, and air bubbles are generated in the film. Note that, in Fig. 1, black portions are air bubbles 30 and are scattered in the film.

Therefore, in order to fill the air bubbles 30, the insulation film 1 according to the first embodiment is impregnated with the same material as the first matrix 10 or a material of a second matrix having a component different from that of the first matrix (hereinafter, also collectively referred to as a "matrix material") in some cases. That is, in an insulation film 1A according to the second embodiment, the air bubbles 30 in the insulation film 1 according to the first embodiment are filled with the matrix material, and the film is denser and the film strength is increased. Fig. 2 is a cross-sectional photograph of the insulation film 1A according to the second embodiment, and it can be seen that the air bubbles 30 as in the insulation film 1 according to the first embodiment are less likely to be observed, and the air bubbles 30 are filled with the matrix material.

The matrix material for impregnation is preferably the same material as that of the first matrix 10 of the insulation film 1 from the viewpoint of affinity. In addition, since the first matrix 10 is silicone, an amount of the silicone is increased, adhesion to a base material on which the insulation film 1A is formed is further improved, and a retaining force for the inorganic material 20 is also increased. Further, as a result of the increase in amount of the silicone, an amount of SiO₂ is also increased, and the insulation film 1A is more effectively maintained even when subjected to a flame.

The material of the second matrix preferably has high affinity with the material of the first matrix, and is preferably the same material as that of the first matrix 10. Even in the case of using the material of the second matrix, since the first matrix 10 is present in the film, the heat resistance by SiO₂ derived from the silicone is maintained.

Since the matrix material permeates into the film from a film surface, a part of the matrix material remains on the film surface and is cured as it is to form a layer. In addition, when an amount of the matrix material is sufficiently large, the remaining matrix material spreads on the film surface separately from the portion immersed in the film, and is cured as it is to form a layer. Depending on the amount of the matrix material, a layer is formed to cover the entire film surface.

That is, in the insulation film 1A, as shown in Fig. 2, a layer 40 is present on a part or the entire film surface. Such a layer 40 acts as a top coat to prevent powder falling off of the inorganic material 20 and the like, suppress damage to the film surface, and alleviate an impact from a collision object.

In addition, since the insulation film 1A is obtained by further impregnation with the matrix material, a gradient composition in which the amount of the matrix material increases toward the film surface is obtained, which is particularly advantageous from the viewpoint of being able to more effectively prevent the powder falling off of the inorganic material 20 or the like, suppress the damage to the film surface, and alleviate an impact from a collision object.

### [Method for Forming Insulation Film]

Since the matrix material is a liquid, dip coating is preferably performed as a method for forming an insulation film. In the dip coating, a winding operation using a ceramic tape or the like is not necessary, the step is simple, there is no problem of winding unevenness, a gap or peeling off, and it is even possible to easily cope with a conductive base material having a complicated shape.

That is, in order to form the insulation film 1 according to the first embodiment, a base material is immersed in a coating liquid containing a material of a first matrix and at least an inorganic material, and pulled up, and then the coating liquid is dried.

In addition, in order to form the insulation film 1A according to the second embodiment, a base material on which the insulation film 1 has been formed is immersed in a coating liquid containing a matrix material for impregnation, and pulled up, and then the coating liquid is dried. An impregnation amount with the matrix material is controlled based on an immersion time.

### [Conductive Member]

The present invention also relates to a conductive member in which a conductive base material is covered with the insulation film 1 or the insulation film 1A. The conductive member is not limited, and here, a bus bar used for connecting a plurality of battery cells or battery modules in a power storage device will be described as an example.

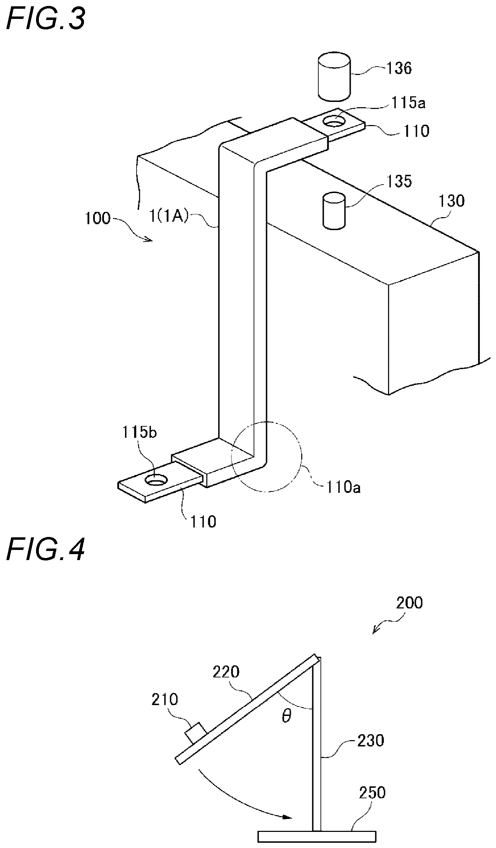

Fig. 3 is an exploded perspective view showing a state where a bus bar 100 according to the present embodiment is mounted to a battery cell 130. A bus bar body 110 is, for example, a metal plate member having a Z shape as a whole, and is fixed by inserting an electrode 135 of the battery cell 130 into a connection hole 115a at one tip and covering the electrode 135 with a terminal cap 136. Adjacent battery cells (not shown) or external devices (not shown) are connected to a connection hole 115b at the other end of the bus bar body 110. A portion of the bus bar body 110 excluding the connection holes 115a and 115b is covered with the insulation film 1 or the insulation film 1A to form the bus bar 100.

Note that, although not shown, the bus bar body 110 may have various shapes depending on an installation location of the battery cell 130, such as an I shape as a whole or an irregular shape having a curved portion.

When the bus bar body 110 has a shape having a bent portion 110a such as a Z shape shown in the drawing or a curved portion (not shown), in a method of winding a ceramic tape as in the bus bar in Patent Literature 1, it is assumed that a winding operation takes time to prevent the winding unevenness or the gap from occurring in the bent portion 110a or the curved portion, the gap is generated due to vibration or the like, or an adhesive is peeled off. However, in the present embodiment, since the insulation film 1 or the insulation film 1A is formed by the "dip coating", such a problem does not occur.

Note that, in order to produce the bus bar 100, the connection holes 115a and 115b are masked and immersed in a coating liquid during the "dip coating".

Since the insulation film 1 or the insulation film 1A covering the bus bar 100 contains silicone, even when the insulation film 1 or the insulation film 1A is subjected to a flame from the battery cell 130 that has experienced thermal runaway, SiO is generated and the insulation film 1 or the insulation film 1A is not burned out.

### [Composite Member]

The present invention also relates to a composite member in which not only the conductive member but also a base material is covered with the insulation film 1 or the insulation film 1A. The composite member is not particularly limited, and other than the bus bar, which is an example of the above conductive member, for example, the base material is a connector, a protective component for a battery module, a case of an electronic component, a battery cell, a battery module, a battery pack, or a coil of a motor.

Note that, as the conductive base material in the case of being applied to the bus bar, the base material itself is energized. However, the base material to be covered with the insulation film 1 or the insulation film 1A according to the present invention is not limited thereto, and the present invention is not precluded from being applied to a base material that is not energized itself.

### Examples

In Examples, the technical effect of the insulation film 1A according to the inventive example was verified.

First, a coating liquid containing a silicone resin and mica was applied to a copper plate (C1100) having a size of 30 mm × 75 mm and a thickness of 2 mm, and then the coating liquid adhering to the copper plate was dried and cured to form an intermediate of the insulation film 1A. Next, the formed intermediate of the insulation film 1A was further impregnated with a silicone resin, and then dried and cured to prepare a test piece A including the insulation film 1A on the copper plate. Note that, the final thickness of the insulation film 1A formed by further impregnation with the silicone resin was 1006 µm.

For comparison, a mica tape having a thickness of 150 µm was doubly wound around the same copper plate to prepare a test piece B.

Then, the presence or absence of peeling off of the insulation film 1A (test piece A/Inventive Example) and the mica tape (test piece B/Comparative Example) after heating using a test device shown in Fig. 4 was observed. A test device 200 includes a movable portion 220 composed of aluminum and having one end to which a test piece 210 is mounted, and a base portion 230 that rotatably supports the other end of the movable portion 220 and that is suspended from a support base 250. One end (test piece side) of the movable portion 220 is lifted by a hand so as to form a predetermined angle θ with respect to the base portion 230, and when the movable portion 220 is released from the hand, it collides with the base portion 230 along a pendulum-like trajectory (arrow in the drawing).

**In** a test, assuming the case where the bus bar was subjected to a flame from a battery cell that had experienced thermal runaway, the test piece A or the test piece B was heated at about 1000°C for a predetermined time (60 minutes) using an electric furnace, and then the test piece A or the test piece B was mounted on the movable portion 220 and collided with the base portion 230 by changing the angle θ to 15°, 30°, 60°, and 90°, respectively. Then, a breakage state of the insulation film 1A as the test piece A and the mica tape as the test piece B after the collision was visually checked.

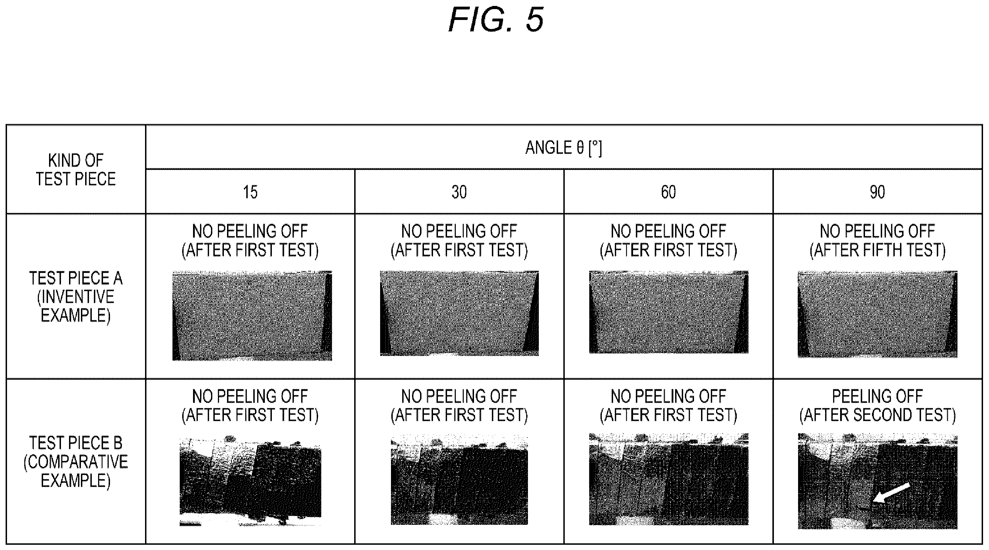

The test results are shown in Fig. 5. As shown in Fig. 5, in the test piece A as Inventive Example, no peeling off is observed in the insulation film 1A as the test piece A after the first repetition test in the case of collision from any position at the angle θ = 15°, 30°, or 60°. Further, in the case of collision from the position at the angle θ = 90°, no peeling is observed in the insulation film 1A as the test piece A even after the fifth repetition test.

On the other hand, in the test piece B as Comparative Example, no peeling is observed on the mica tape as the test piece B after the first repetition test in the case of collision from any position at the angle θ = 15°, 30°, or 60°, but peeling is observed on the mica tape as the test piece B after the second repetition test in the case of collision from the position at the angle θ = 90° (see arrows in the drawing).

As can be seen from this, the insulation film 1A as the test piece A as Inventive Example maintains a sufficient film even when exposed to a high temperature, and is suitable for use in, for example, a bus bar.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. **In** addition, the constituent elements in the above embodiments may be freely combined without departing from the gist of the present invention.

Note that, the present application is based on a Japanese patent application (Japanese Patent Application No. 2023-036021) filed on March 8, 2023, and the contents thereof are incorporated herein by reference.

### REFERENCE SIGNS LIST

1, 1A insulation film
10 first matrix
20 inorganic material
30 air bubble
40 layer
100 bus bar
110 bus bar body
115a, 115b connection hole
130 battery cell
135 electrode
136 terminal cap
200 test device
210 test piece
220 movable portion
230 base portion
250 support base

## Claims

1. An insulation film comprising:
a first matrix containing silicone; and
at least an inorganic material dispersed in the first matrix.

2. The insulation film according to claim 1, wherein a layer comprising a material of the first matrix is provided on at least a part of a film surface.

3. The insulation film according to claim 1 or 2, having a gradient composition of the first matrix, in which a content of the first matrix increases toward the film surface.

4. The insulation film according to claim 1 or 2, wherein a layer comprising a material of a second matrix having a component different from a component of the first matrix is provided on at least a part of the film surface.

5. The insulation film according to claim 4, having a gradient composition of the second matrix, in wherein a content of the second matrix increases toward the film surface.

6. The insulation film according to claim 1 or 2, wherein the inorganic material is at least one kind selected from silica, alumina, mullite, and zirconia.

7. The insulation film according to claim 1 or 2, wherein the inorganic material is at least one kind selected from a glass-based material, mica, kaolin, talc, clay, pyrophyllite, montmorillonite, bentonite, wollastonite, xonotlite, zeolite, diatomaceous earth, and halloysite.

8. The insulation film according to claim 1 or 2, wherein the inorganic material has at least one kind selected from the group consisting of a flaky shape, a fibrous shape, and a particulate shape.

9. The insulation film according to claim 1 or 2, wherein the inorganic material contains at least one of a flaky glass-based material and mica.

10. A method for forming an insulation film, comprising:
immersing a base material in a coating liquid containing a material of a first matrix and at least an inorganic material, and then drying the coating liquid adhering to the base material.

11. The method for forming an insulation film according to claim 10, wherein the base material on which an insulation film has been formed is impregnated by immersing in a coating liquid containing the material of the first matrix or a material of a second matrix having a different component from a component of the first matrix.

12. A composite member comprising:
a base material at least partially covered with the insulation film according to claim 1 or 2.

13. The composite member according to claim 12, wherein the base material is a bus bar that connects a plurality of battery cells or battery modules.

14. The composite member according to claim 12, wherein the base material is a connector, a protective component for a battery module, a case of an electronic component, a battery cell, a battery module, a battery pack, or a coil of a motor.
